(19) **Europäisches Patentamt**

**European Patent Office**

**Office européen des brevets**

(11) **EP 1 388 942 B1**

(12) **EUROPEAN PATENT SPECIFICATION**

(45) Date of publication and mention
of the grant of the patent:
**15.03.2006 Bulletin 2006/11**

(51) Int Cl.:
*H03M 1/12* (2006.01)

(21) Application number: **03102462.3**

(22) Date of filing: **07.08.2003**

(54) **Conversion circuit, tuner and demodulator**

Wandlerschaltung, Tunerschaltung und Demodulator

Circuit de conversion, circuit d'accord et démodulateur

(84) Designated Contracting States:
**DE GB**

(30) Priority: **07.08.2002 GB 2182988**

(43) Date of publication of application:
**11.02.2004 Bulletin 2004/07**

(73) Proprietor: **Zarlink Semiconductor Limited
Swindon,
Wiltshire SN2 2QW (GB)**

(72) Inventors:
• **Arambepola, Bernard
N21 1PD, London (GB)**

• **Hackney, Philip
Wiltshire SN4 8LW (GB)**

(74) Representative: **Robinson, John Stuart et al
Marks & Clerk,
4220 Nash Court,
Oxford Business Park South
Oxford OX4 2RU (GB)**

(56) References cited:
**EP-A- 0 658 979**      **EP-A- 0 800 266**
**US-A- 4 737 728**      **US-A- 5 473 280**
**US-A- 5 696 796**      **US-A- 5 768 323**
**US-A- 5 982 823**      **US-A- 5 983 254**

**Description**

The present invention relates to a conversion circuit for converting analog baseband in-phase and quadrature signals to digital signals. The present invention also relates to radio frequency tuners and demodulators including such a conversion circuit.

It is known to provide a radio receiver, for example for orthogonal frequency division multiplexed (OFDM) signals, for example for digital terrestrial television reception. As part of the demodulation function of signals of this and other types, in-phase and quadrature signals are generated. In known arrangements, the selected channel for reception is converted to a sufficiently low intermediate frequency or to baseband and the resulting composite signal is then supplied to an analog-digital converter (ADC), which samples and digitises the input signal to provide a digital composite signal. Separation of the in-phase and quadrature components is then performed in the digital domain.

EP-A-0 800 266 discloses a conversion circuit for converting analog baseband in-phase and quadrature signals to digital signals.

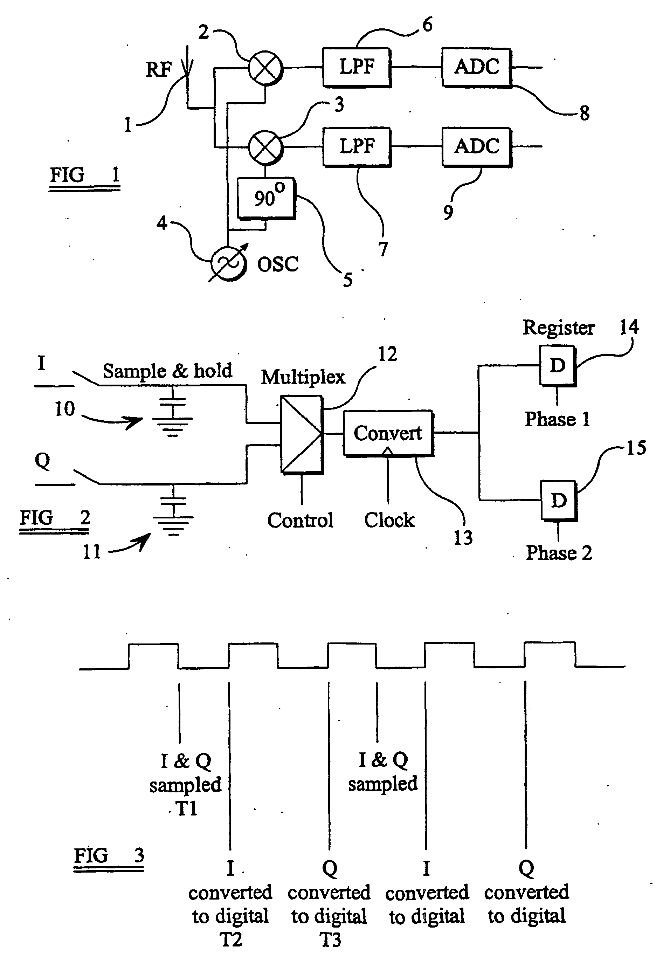

There are advantages to deriving the in-phase and quadrature components in the analog domain before digitisation in an ADC. In such an arrangement, the quadrature conversion is performed by the radio frequency circuitry and results in analog baseband in-phase and quadrature signals or signal components, which then have to be converted to the digital domain. An example of this type of arrangement is shown in Figure 1 of the accompanying drawings. A broadband radio frequency (RF) signal, for example from a terrestrial aerial, a satellite aerial system or a cable distribution system, is received at an input 1 of a tuner and is supplied to in-phase and quadrature mixers 2 and 3. A local oscillator (OSC) 4 supplies a local oscillator signal directly to the mixer 2 and via a 90° phase shifter 5 to the mixer 3. The oscillator 4 is tunable over a sufficiently wide range of frequencies to be able to select any desired channel from the broadband input signal for reception.

The mixers 2 and 3 convert the selected channel to baseband in-phase and quadrature components, which are supplied to anti-aliasing low pass filters (LPF) 6 and 7, which filter the in-phase and quadrature signals before supplying them to respective ADCs 8 and 9, respectively. In order for the following digital demodulation processing to be performed, the ADCs 8 and 9 sample the in-phase and quadrature signals at the same time instants.

Although a circuit arrangement of the type illustrated in Figure 1 provides an acceptable performance, it requires two ADCs. Fast ADCs occupy a substantial amount of silicon area in an integrated circuit and consume a relatively large amount of power, which makes such an arrangement disadvantageous because of cost and power consumption.

According to a first aspect of the invention, there is provided a conversion circuit for converting analog baseband in-phase and quadrature signals to digital signals, comprising: a first sampling circuit for sampling one of the analog in-phase and quadrature signals at a first series of first times to provide first samples; a second sampling circuit for sampling the other of the analog in-phase and quadrature signals at a second series of second times different from the first times to provide second samples; a single analog-digital converter for converting the first and second samples to first and second digital samples; and an interpolator for interpolating at least one of the first and second digital samples to produce first and second output digital samples representing the one and the other, respectively, of the analog in-phase and quadrature signals at third and fourth series of third and fourth times, respectively, with the difference between each third time and the respective fourth time being less than the difference between the corresponding first and second times.

The difference between each third time and the respective fourth time may be substantially zero.

The interpolator may be arranged to interpolate only the second digital samples.

The circuit may comprise a delaying circuit for delaying the first digital samples by a time delay substantially equal to the latency of the interpolator.

Each of the second times may be between the first times of a consecutive pair. Each of the second times may be half way between the first times of the consecutive pair.

The interpolator may be arranged to perform band-limited interpolation. The interpolation may be a windowed sinc interpolation. The window may be a Hamming window. As an alternative, the interpolation may be a spline interpolation.

The interpolator may be arranged to control the difference between each third time and the respective fourth time in accordance with a feedback signal representing a quality of reception. The reception quality may be at least one of signal-to-noise ratio and bit-error-rate.

The circuit may be formed as a single monolithic integrated circuit

According to a second aspect of the invention, there is provided a radio frequency tuner comprising a circuit according to the first aspect of the invention and a frequency converter for converting a selected radio frequency channel to the analog baseband in-phase and quadrature signal.

The tuner may comprise a digital demodulator arranged to receive the first and third digital samples.

According to a third aspect of the invention, there is provided a demodulator comprising a circuit according to the first aspect of the invention and a demodulating arrangement arranged to receive the first and third digital samples.

It is thus possible to provide an arrangement which converts analog baseband in-phase and quadrature signals to digital samples requiring only a single ADC. This results in a substantial saving of silicon area on an integrated circuit and minimises or reduces power consumption compared with other techniques. Such an arrangement makes available in-phase and quadrature digital samples effectively sampled at the same times to allow subsequent processing in the digital domain and allows the standard techniques to be used for retrieving the modulating signals.

The invention will be further described, by way of example, with reference to the accompanying drawings, in which:

Figure 1 illustrates schematically a possible architecture for a radio frequency tuner;

Figure 2 is a block schematic diagram of an analog-digital conversion arrangement given by way of a comparative example;

Figure 3 is a timing diagram relating to the arrangement of Figure 2;

Figure 4 is a block schematic diagram of another analog digital conversion arrangement given as a comparative example;

Figure 5 is a timing diagram for the arrangement of Figure 4;

Figure 6 illustrates the sampling process performed by the arrangement of Figure 4;

Figure 7 illustrates the frequency spectra in the complex plane of a received radio frequency channel, a baseband modulating signal to be recovered, and baseband in-phase and quadrature components;

Figure 8 illustrates the frequency spectra of sampled baseband signals and components;

Figure 9 illustrates a sampling process on in-phase and quadrature components;

Figure 10 is a block schematic diagram of part of a conversion circuit constituting an embodiment of the invention;

Figure 11 illustrates a variation of the timing diagram of Figure 5;

Figure 12 is a block schematic diagram of a tuner and demodulator incorporating a conversion circuit including the part illustrated in Figure 10 and constituting an embodiment of the invention; and

Figure 13 is a diagram similar to Figure 12 illustrating another embodiment of the invention.

Like reference numerals refer to like parts throughout the drawings.

Figure 2 illustrates one possible example of providing conversion of analog baseband in-phase and quadrature signals to digital signals using a single analog-digital converter. The in-phase (I) and quadrature (Q) signals from a tuner arrangement are supplied to sample and hold circuits 10 and 11 illustrated schematically as series switches and storage capacitors. The outputs of the circuits 10 and 11 are supplied to respective inputs of a multiplexer 12 whose output is supplied to an ADC 13. The output of the ADC 13 is supplied to clocked delay circuits or registers 14 and 15, which act as a demultiplexer for separating the in-phase and quadrature digital samples from the converter 13.

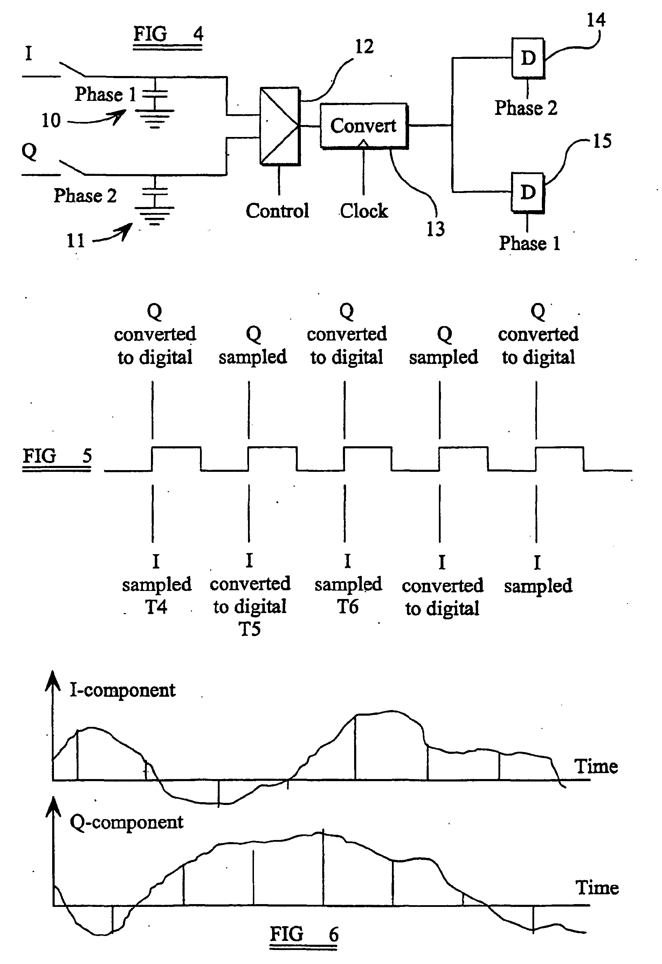

The control and clock signals supplied to the various parts of the circuit of Figure 2 are illustrated with reference to a system clock signal shown in Figure 3. In order for the I and Q signals to be sampled at the same times, control signals are supplied to the sample and hold circuits 10 and 11 at the time instant T1. At a time instant T2, a control signal is supplied to the multiplexer 12, which passes the I sample to the converter 13. The converter 13 performs analog-digital conversion and the digitised I sample is then clocked into the register 14.

At time T3, the multiplexer 12 supplies the Q sample to the converter 13 which converts it to a digital sample and clocks this into the register 15.

In such an arrangement, the I and Q samples are converted to digital samples with different time delays. This affects the accuracy of the analog-digital conversion process, which is limited by both the resulting total harmonic distortion (THD) and the signal-to-noise ratio (SNR).

Practical sample and hold circuits such as 10 and 11 have a finite output settling response which presents a harmonic distortion limitation to the conversion process which is dependent on the available settling time. In the example illustrated in Figures 2 and 3, the settling time available for the I sample is half a clock period whereas the settling time available for the Q samples is three half clock periods and this results in a harmonic distortion mismatch between the channels. To ensure that such a mismatch would be negligible, the sample and hold circuits 10 and 11 would need to meet a specified accuracy when operating with a maximum settling time of half a clock period.

The SNR of the analog-digital conversion may also differ between the two channels. For example, where the sample and hold circuits 10 and 11 and the ADC 13 are connected to finite impedance power and ground supplies, which also supply logic circuitry synchronised to a master clock signal of half the ADC sampling rate, a damped oscillation is produced on the power and ground nodes of the circuits. Practical circuits have only a limited degree of power supply rejection and, because the amplitude of supply oscillations may be significantly less for the Q channel than for the I channel, differences in SNR can result This creates problems because accuracy of analog-digital conversion is very important in order to obtain high performance from digital signal processing systems.

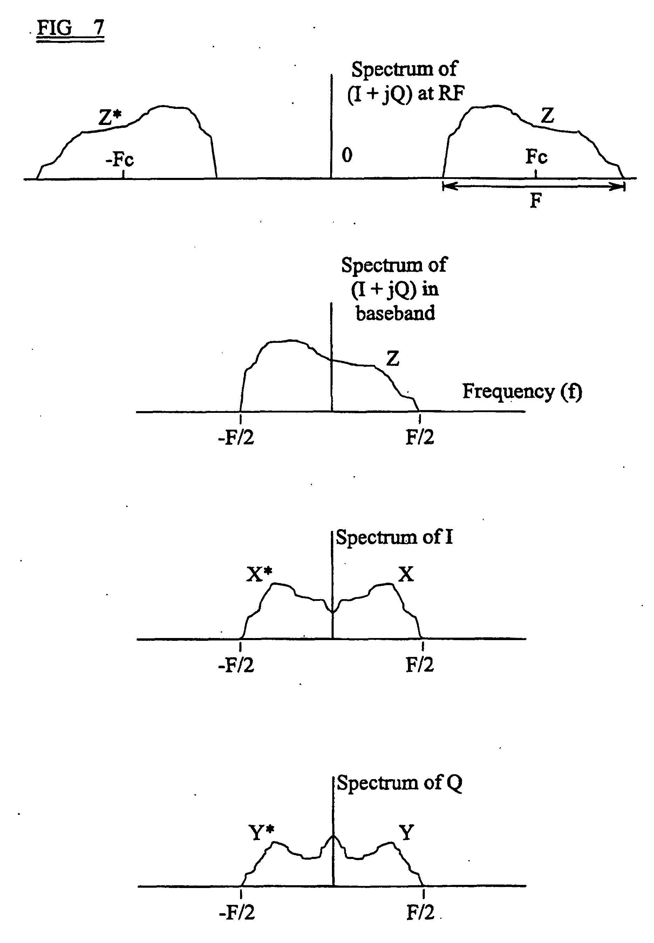

Figures 4 and 5 illustrate an alternative arrangement in which the I and Q signals are not sampled at the same times. Thus, differently phased control signals (phase 1 and phase 2) are supplied to the sample and hold circuits. As shown in Figure 5, at time T4, the I signal is sampled. At time T5, the I sample is converted to a digital sample and the Q signal is sampled. At time T6, the Q sample is converted to a digital sample and the I signal is again sampled, and so on.

A settling time of one clock cycle is thus provided for each of the I and Q channels. This increase in settling time for the circuits 10 and 11 reduces the design requirements and the power dissipation and provides high performance analog-digital conversion. However, the I and Q components are sampled at different times as illustrated in Figure 6 and the resulting digital samples are not suitable for subsequent digital signal processing.

The top diagram in Figure 7 illustrates the spectrum of the selected channel or signal at radio frequency with a carrier frequency Fc and a bandwidth F. The next diagram illustrates the signal after conversion to baseband and after low pass filtering to prevent aliasing in subsequent signal processing steps. The next two diagrams illustrate the individual spectra for the I and Q components.

Although the spectrum of the baseband (I + jQ) signal is generally asymmetric, the spectra of the individual I and Q components exhibit conjugate symmetry about zero frequency. In other words, $X(f) = X*(-f)$ and $Y(f) = Y*(-f)$.

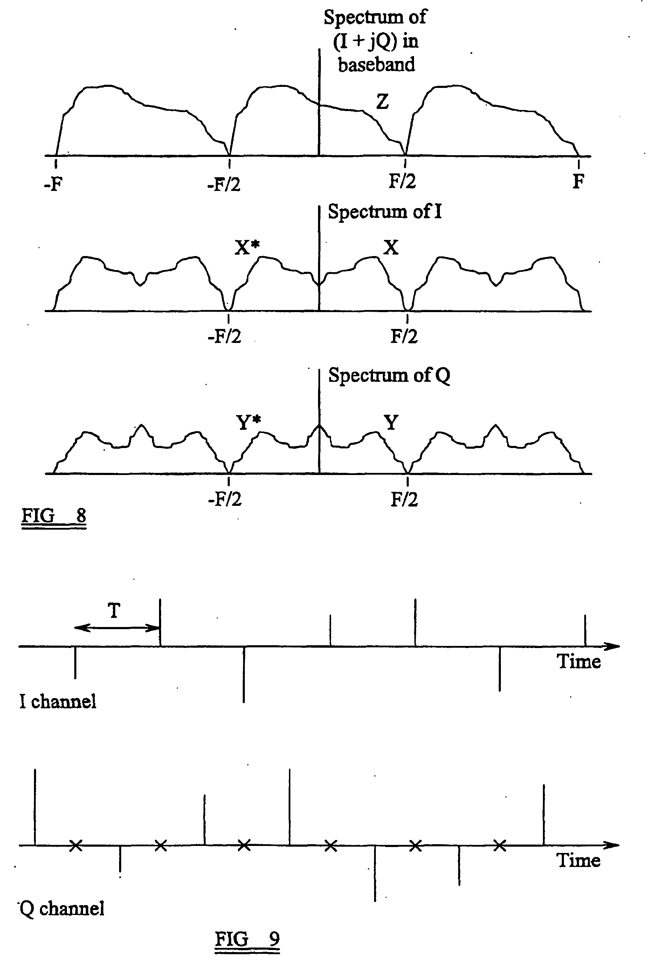

The spectra resulting from sampling the baseband signal at a frequency F are illustrated in Figure 8 and the individual spectra are repeated with a period F. However, because the signals I and Q are not sampled at the same times, the expected relationships given by the following equations do not apply:

$$Z(f) = X(f) + jY(f) \text{ for } f \geq 0 \text{ and } Z(f) = X^\bullet(f) + jY^\bullet(f) \text{ for } f < 0$$

Where the * refers to the complex conjugate.

As illustrated in Figure 7, the I or "real" part and the Q or "imaginary" part of the complex baseband signal are both real-valued signals with a maximum frequency of F/2. For the sampling frequency of F, both parts satisfy the Nyquist criterion for real valued signals as illustrated in Figure 8. Thus, either of these signals can be interpolated independently to obtain any intermediate value of the corresponding analog signal illustrated in Figure 6. In other words, any point of the analog signal I or Q can be reconstructed by digitally interpolating the sampled values of the corresponding signal. As illustrated in Figure 9, the Q signal can be interpolated to obtain the values at the sampling times of the I signal, where the sampling period T is equal to 1/F.

For example, the sample-sequence of the quadrature (Q) channel can be interpolated to obtain the values of the corresponding analog channel Q at time instants mid-way between sampling instants.

Any known interpolation technique can be used for this purpose. The best known method for band-limited interpolation makes use of the sine function $\sin(\pi x)/\pi x$. This is a very long function in time and hence a windowed version of this function given by the following equation is used:

$$h(i) = W(i)\frac{\sin(\pi(i+0.5))}{\pi(i+0.5)}, \text{ for } i = 0,1,...,N/2-1 \tag{1}$$

where W is the window function. In this example, a Hamming window is chosen and the equation for this is:

$$W(i) = 0.54 - 0.46\cos(2\pi(i+N/2)/(N-1)), \text{ for } i = 0,1,...,N/2-1 \tag{2}$$

However, there are other window functions which may be used for gradually tapering the "tail" of the sinc function to zero.

The interpolation function is symmetric about the centre and hence

$$h(i) = h(-i - 1) \qquad (3)$$

The asymmetry in the index is because h(-1)=h(0).

The interpolated value at a specific time point is obtained by the weighted addition of N samples, N/2 to the left of the point and N/2 to the right, as shown by the following equation. The weighting function is h(i).

$$y(k - 0.5) = \sum_{i=-N/2}^{N/2-1} h(i)y(k + i) \qquad (4)$$

This interpolation operation is not perfect. There will be errors in interpolation, which can be decreased by increasing the value of N. In a digital hardware implementation, further errors will be caused by the need to quantise the weighting function coefficients to the finite wordlengths. These errors may be treated as a white noise process. The wordlengths and the interpolation length N have to be chosen such that the noise floor of the interpolation process is well below the thermal noise floor of the signals I and Q.

In terrestrial demodulation, the operating signal to noise ratio (SNR) is expected to be about 20 dB. With very high coding rates (to transmit maximum amount of data) the SNR may have to be increased to about 30 dB. Hence, as a design parameter, the SNR of the interpolation may be made equal to 45 dB. The interpolation noise floor is 25 dB below the typical input noise floor. In this case, the degradation of SNR due to interpolation is negligible. If the input SNR is 30 dB, then the interpolation noise floor is 15 dB below the input noise floor and the SNR degradation due to interpolation is about 0.13 dB. A 45 dB interpolation SNR can be achieved using an interpolation length N of 20 and a coefficient wordlength of 10 bits.

Satellite receivers operate with much poorer SNRs, usually below 10 dB. Hence the same interpolator can be used in a satellite demodulation application with negligible loss of performance. In fact, for such an application, the interpolation length could be substantially reduced without affecting performance.

IN QAM64 cable systems, the operating SNR is below 30 dB and hence this interpolator is adequate. In QAM256 cable systems, the operating SNR could be around 35 dB. Then this interpolator would degrade the SNR by about 0.5dB, which may be unacceptable so that longer interpolators and larger wordlengths might be necessary.

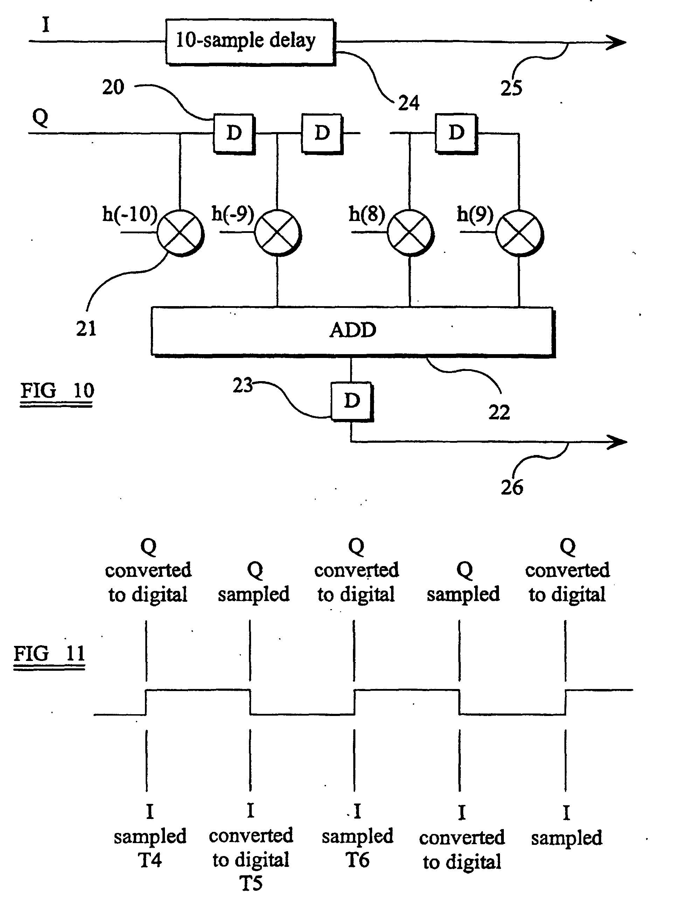

Figure 10 illustrates diagrammatically an interpolator of this type for receiving the demultiplexed I and Q digital samples from the ADC. In this case, interpolation is performed on the Q samples but it could equally well be performed on the I samples. In fact, interpolation could be used for both sets of samples such that the resulting digital samples represent the I and Q components at common sampling times.

The interpolator comprises a set of cascade-connected registers, such as 20, arranged to form a shift register such that each sample is delayed by one timing period by each register 20. The undelayed Q samples and the samples from the registers 20 are supplied via multipliers such as 21 to an adding or summing circuit 22. Each of the multipliers 21 multiplies the input sample by a corresponding term of the interpolation function h(i). The output of the adding circuit 22 is supplied via a further delay register 23 to provide the interpolated samples of the Q signal.

The I samples are supplied to a ten sample delay circuit 24, for example in the form of a shift register, providing a delay substantially equal to the latency of the interpolator. This latency may be more than ten samples, for example if pipelining operations are performed in the multiplers 21 and the summing circuit 22. In such a case, the circuit 24 provides additional sample delays to compensate for the additional latency. As a result, I and Q digital samples corresponding to the same sampling time are available simultaneously at the outputs 25 and 26, respectively.

Figure 10 illustrates a hardware implementation of the interpolator but it is also possible for such an arrangement to be implemented in software. Also, Figure 10 illustrates one possible architecture for a hardware interpolator. Other architectures and implementations are possible. For example, another implementation may be derived from that shown in Figure 10 by time-multiplexing a hardware multiplier between several multiplications if the multiplier speed is sufficiently greater than the sampling rate. It is also possible to exploit the symmetry of the interpolator to halve the number of multiplications by adding the Q samples with the same coefficients prior to multiplications.

In the case of hardware implementations, the interpolator occupies a much smaller area of silicon on an integrated circuit and has a much smaller power consumption than a second ADC would require. Also, the interpolator may be disposed in the same region of the integrated circuit as other digital logic circuitry with associated noisy clocks and power supplies and does not therefore require the provision of high quality power supplies and clock signals. A substantial saving in silicon area, power consumption and design complexity can therefore be achieved compared with alternative techniques.

In the arrangement shown in Figure 10, only the Q samples are interpolated so as to represent analog Q values at the I sampling times. However, in general, the arrangement is symmetrical so that the Q samples may be un-interpolated and the I samples may instead be interpolated to values at the Q sampling times. Also, it is possible for both the I and the Q samples to be interpolated to values of the analog signals at times other than the I and Q sampling times.

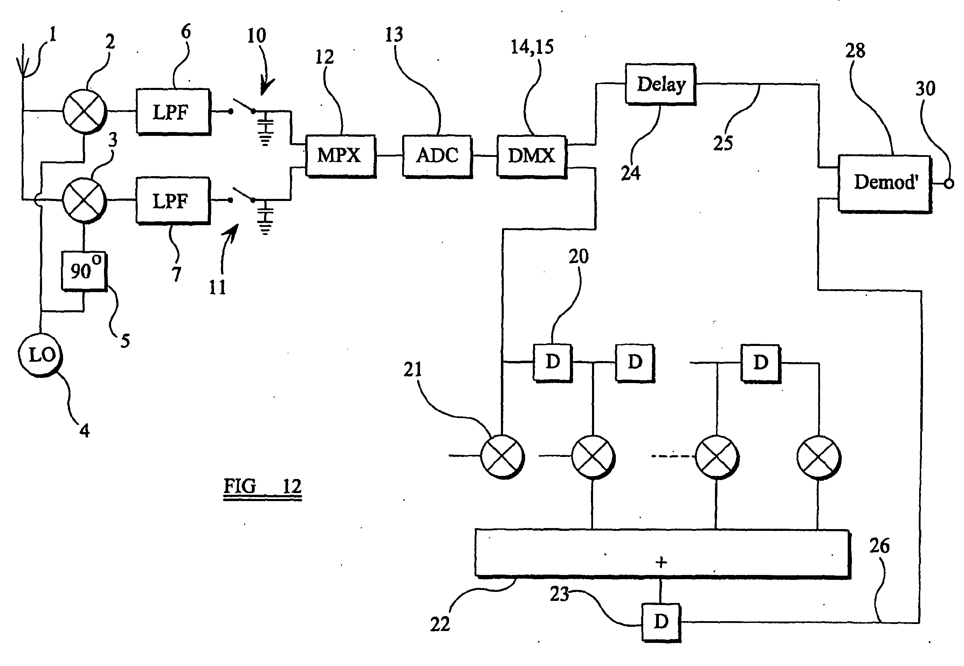

Figure 11 illustrates an alternative arrangement which resembles the timing illustrated in Figure 5 but in which the clock frequency is halved and the sampling and conversion processes make use of the rising and falling edges of the clock signal. In this case, the mark-to-space ratio of the clock signal may not be exactly 50:50; for example, it might be 60:40. The same interpolation technique may be used except that the interpolation points will not be precisely at the centres of the sampling intervals. This may be accommodated by changing the interpolation coefficients in equation (1). For example, for a 60:40 mark-to-space ratio, the interpolation function is given by:

$$h(i) = W(i)\frac{\sin(\pi\,(i+0.6))}{\pi\,(i+0.6)}\,,\,for\,\,i = -N/2,...0,1...,N/2-1 \qquad (5)$$

In this case, the interpolation weight sequence is no longer symmetric about the centre point.

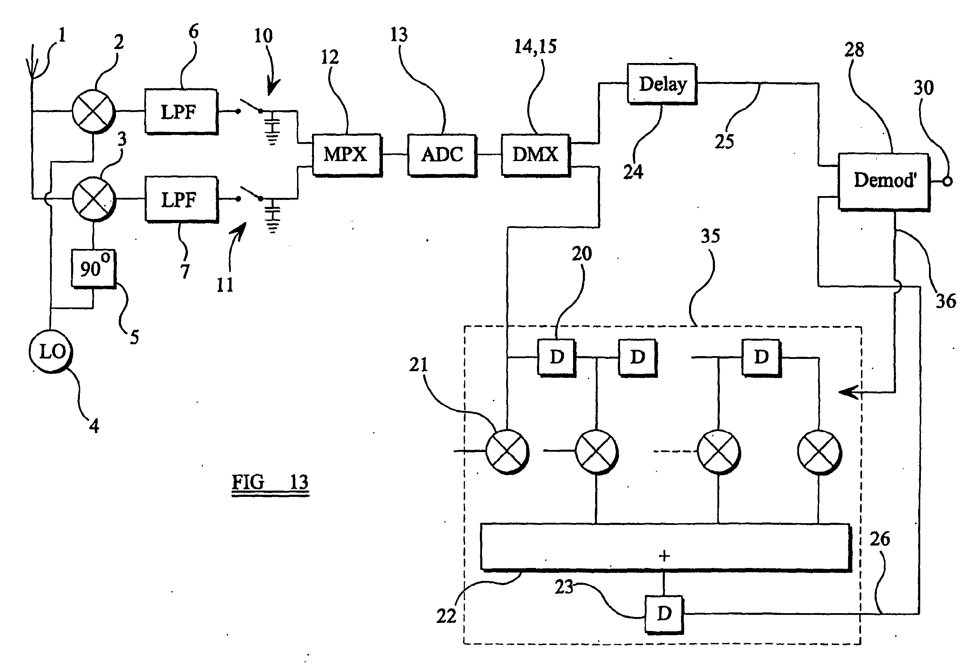

Figure 12 illustrates a receiver comprising the conversion circuit 10-15,20-26 as illustrated in Figures 4 and 10 together with a demodulator 28 for processing the I and Q samples at the outputs 25 and 26 in order to extract a demodulated signal and supply this to an output 30. Any suitable demodulating arrangement may be used in accordance with the modulation standard of the signal being received. The receiver further comprises a front end tuner arrangement of the type illustrated in Figure 1 but omitting the individual ADCs 8 and 9, whose function is performed by the conversion circuit. Part or the whole of the receiver shown in Figure 12 may be embodied as a single monolithic integrated circuit.

Figure 13 illustrates a receiver which differs from that shown in Figure 12 in that the interpolator 35 receives a control signal 36 from the demodulator 28 for controlling the interpolation phase. Thus, the timing points at which samples are interpolated is controlled in accordance with a quality of reception signal produced by the demodulator 28. For example, the demodulator 28 may produce one or more of; a differential timing error between I and Q channels; an estimate of the signal-to-noise ratio; a bit-error-rate signal. The signal 36 may be derived from one or more of these measures of reception quality and is used as a feedback signal to control the interpolation phase of the interpolator 35. Alternatively, the signal 36 may represent the difference between an actual reception quality signal and an acceptable threshold value for such a signal.

In accordance with the value of the signal 36 fed back from the demodulator 28, the interpolator 35 varies the times of the interpolated samples until the reception quality is maximised or is greater than an acceptable threshold level. This results in the sampling times of the interpolated samples being closer to the actual sampling times of the uninterpolated samples. Where the feedback is used to maximise reception quality, the interpolated samples will be interpolated at or close to the times of the uninterpolated samples. Where an acceptable quality of reception is achieved without necessarily optimising or maximising the reception quality, the interpolated samples will not generally coincide with the uninterpolated samples but will be much closer in time than would be achieved without interpolation.

**Claims**

1. A conversion circuit for converting analog baseband in-phase and quadrature signals to digital signals, **characterised by** comprising: a first sampling circuit (10) for sampling one of the analog in-phase and quadrature signals at a first series of first times to provide first samples; a second sampling circuit (11) for sampling the other of the analog in-phase and quadrature signals at a second series of second times, different from the first times, to provide second samples; a single analog-digital converter (13) for converting the first and second samples to first and second digital samples; and an interpolator (21-23, 35) for interpolating at least one of the first and second digital samples to produce first and second output digital samples representing the one and the other, respectively, of the analog in-phase and quadrature signals at third and fourth series of third and fourth times, respectively, with the difference between each third time and the respective fourth time being less than the difference between the corresponding first and second times.

2. A circuit as claimed in claim 1, **characterised in that** the difference between each third time and the respective fourth time is substantially zero.

3. A circuit as claimed in claim 1 or 2, **characterised in that** the interpolator (21-23, 35) is arranged to interpolate only the second digital samples.

4. A circuit as claimed in claim 3, **characterised by** comprising a delaying circuit (24) for delaying the first digital samples by a time delay substantially equal to the latency of the interpolator (21-23, 35).

5. A circuit as claimed in any one of the preceding claims, **characterised in that** each of the second times is between the first times of a consecutive pair.

6. A circuit as claimed in claim 5, **characterised in that** each of the second times is halfway between the first times of the consecutive pair.

7. A circuit as claimed in any one of the preceding claims, **characterised in that** the interpolator (21-23, 35) is arranged to perform band-limited interpolation.

8. A circuit as claimed in claim 7, **characterised in that** the interpolation is a windowed sinc interpolation.

9. A circuit as claimed in claim 8, **characterised in that** the window is a Hamming window.

10. A circuit as claimed in claim 7, **characterised in that** the interpolation is a spline interpolation.

11. A circuit as claimed in any one of the preceding claims, **characterised in that** the interpolator (21-23, 35) is arranged to control the difference between each third time and the respective fourth time in accordance with a feedback signal (36) representing a quality of reception.

12. A circuit as claimed in claim 11, **characterised in that** the reception quality is at least one of signal-to-noise ratio and bit-error-rate.

13. A circuit as claimed in any one of the preceding claims, **characterised by** being formed as a single monolithic integrated circuit.

14. A radio frequency tuner **characterised by** comprising a circuit (10-15, 20-26, 35, 36) as claimed in any one of the preceding claims and a frequency converter (1-7) for converting a selected radio frequency channel to the analog baseband in-phase and quadrature signals.

15. A tuner as claimed in claim 14, **characterised by** comprising a digital demodulator (28) arranged to receive the output digital samples.

16. A demodulator **characterised by** comprising a circuit (10-15, 20-26, 35, 36) as claimed in any one of claims 1 to 13 and a demodulating arrangement (28) arranged to receive the output digital samples.


**Patentansprüche**

1. Umsetzschaltung zum Umsetzen analoger In-Phase- und Quadratur-Basisbandsignale in digitale Signale, **gekennzeichnet durch**:

   eine erste Abtastschaltung (10) zum Abtasten eines der In-Phase- und Quadratursignale in einer ersten Serie von ersten Zeitpunkten, um erste Abtastwerte bereitzustellen;
   eine zweite Abtastschaltung (11) zum Abtasten des anderen der In-Phase- und Quadratursignale in einer zweiten Serie von zweiten Zeitpunkten, die sich von den ersten Zeitpunkten unterscheiden, um zweite Abtastwerte bereitzustellen;
   einen einzelnen Analog/Digital-Umsetzer (13) zum Umsetzen der ersten und zweiten Abtastwerte in erste und zweite digitale Abtastwerte; und
   einen Interpolator (21-23, 35) zum Interpolieren mindestens eines der ersten und zweiten digitalen Abtastwerte, um erste und zweite digitale Ausgangs-Abtastwerte zu erzeugen, die das eine bzw. das andere der analogen In-Phase- und Quadratur-Basisbandsignale in einer dritten bzw. vierten Serie von dritten bzw. vierten Zeitpunkten darstellen, wobei die Differenz zwischen jedem dritten Zeitpunkt und dem entsprechenden vierten Zeitpunkt viermal kleiner als die Differenz zwischen den entsprechenden ersten und zweiten Zeitpunkten ist.

2. Schaltung nach Anspruch 1, **dadurch gekennzeichnet, daß** die Differenz zwischen jedem dritten Zeitpunkt und dem entsprechenden vierten Zeitpunkt im wesentlichen null ist.

3. Schaltung nach Anspruch 1 oder 2, **dadurch gekennzeichnet, daß** der Interpolator (21-23, 35) dafür eingerichtet ist, nur die zweiten digitalen Abtastwerte zu interpolieren.

4. Schaltung nach Anspruch 3, **dadurch gekennzeichnet, daß** sie eine Verzögerungsschaltung (24) zum Verzögern der ersten digitalen Abtastwerte um eine zeitliche Verzögerung, die im wesentlichen gleich der Latenzzeit des Interpolators (21-23, 35) ist, umfasst.

5. Schaltung nach einem der vorhergehenden Ansprüche, **dadurch gekennzeichnet, daß** jeder der zweiten Zeitpunkte zwischen den ersten Zeitpunkten eines zusammenhängenden Paares liegt.

6. Schaltung nach Anspruch 5, **dadurch gekennzeichnet, daß** jeder der zweiten Zeitpunkte in der Mitte zwischen den ersten Zeitpunkten des zusammenhängenden Paares liegt.

7. Schaltung nach einem der vorhergehenden Ansprüche, **dadurch gekennzeichnet, daß** der Interpolator (21-23, 35) dafür eingerichtet ist, eine bandbegrenzte Interpolation durchzuführen.

8. Schaltung nach Anspruch 7, **dadurch gekennzeichnet, daß** die Interpolation eine Sinc-Interpolation mit Fensterfunktion ist.

9. Schaltung nach Anspruch 8, **dadurch gekennzeichnet, daß** das Fenster ein Hamming-Fenster ist.

10. Schaltung nach Anspruch 7, **dadurch gekennzeichnet, daß** die Interpolation eine Spline-Interpolation ist.

11. Schaltung nach einem der vorhergehenden Ansprüche, **dadurch gekennzeichnet, daß** der Interpolator (21-23, 35) dafür eingerichtet ist, die Differenz zwischen jedem dritten Zeitpunkt und dem entsprechenden vierten Zeitpunkt entsprechend einem Rückkopplungssignal (36) zu steuern, das eine Empfangsqualität darstellt.

12. Schaltung nach Anspruch 11, **dadurch gekennzeichnet, daß** die Empfangsqualität mindestens eines von folgendem ist: Signal-Rausch-Verhältnis und Bitfehlerrate.

13. Schaltung nach einem der vorhergehenden Ansprüche, **dadurch gekennzeichnet, daß** sie als ein einzelner monolithischer integrierter Schaltkreis ausgebildet ist.

14. Funkfrequenz-Tuner, **dadurch gekennzeichnet, daß** er eine Schaltung (10-15, 20-26, 35, 36) nach einem der vorhergehenden Ansprüche und einen Frequenzumsetzer (1-7) zum Umsetzen eines ausgewählten Funkfrequenzkanals in die analogen In-Phase- und Quadratur-Basisbandsignale umfasst.

15. Tuner nach Anspruch 14, **dadurch gekennzeichnet, daß** er einen digitalen Demodulator (28) umfasst, der dafür eingerichtet ist, die digitalen Ausgangs-Abtastwerte zu empfangen.

16. Demodulator, **dadurch gekennzeichnet, daß** er eine Schaltung (10-15, 20-26, 35, 36) nach einem der Ansprüche 1 bis 13 und eine Demodulatoranordnung,(28), die dafür eingerichtet ist, die digitalen Ausgangs-Abtastwerte zu empfangen, umfasst.

**Revendications**

1. Circuit de conversion pour convertir des signaux analogiques de bande de base en phase et en quadrature selon des signaux numériques, **caractérisé en ce qu'**il comprend:

   un premier circuit d'échantillonnage (10) pour échantillonner l'un des signaux analogiques en phase et en quadrature au niveau d'une première série de premiers temps afin de produire des premiers échantillons;
   un second circuit d'échantillonnage (11) pour échantillonner l'autre des signaux analogiques en phase et en quadrature au niveau d'une seconde série de seconds temps qui sont différents des premiers temps afin de produire des seconds échantillons;

un unique convertisseur analogique-numérique (13) pour convertir les premier et second échantillons selon des premier et second échantillons numériques; et

un interpolateur (21-23; 35) pour interpoler au moins l'un des premier et second échantillons numériques afin de produire des premier et second échantillons numériques de sortie représentant l'un et l'autre des signaux analogiques en phase et en quadrature au niveau respectivement de troisième et quatrième séries de troisièmes et quatrièmes temps, la différence entre chaque troisième temps et le quatrième temps respectif étant inférieure à la différence entre les premier et second temps correspondants.

2. Circuit selon la revendication 1, **caractérisé en ce que** la différence entre chaque troisième temps et le quatrième temps respectif est de sensiblement zéro.

3. Circuit selon la revendication 1 ou 2, **caractérisé en ce que** l'interpolateur (21-23; 35) est agencé pour interpoler seulement les seconds échantillons numériques.

4. Circuit selon la revendication 3, **caractérisé en ce qu'**il comprend un circuit de retard (24) pour retarder les premiers échantillons numériques d'un retard temporel égal sensiblement à la latence de l'interpolateur (21-23; 35).

5. Circuit selon l'une quelconque des revendications précédentes, **caractérisé en ce que** chacun des seconds temps est entre les premiers temps d'une paire consécutive.

6. Circuit selon la revendication 5, **caractérisé en ce que** chacun des seconds temps est à mi-chemin entre les premiers temps de la paire consécutive.

7. Circuit selon l'une quelconque des revendications précédentes, **caractérisé en ce que** l'interpolateur (21-23; 35) est agencé pour réaliser une interpolation à bande limitée.

8. Circuit selon la revendication 7, **caractérisé en ce que** l'interpolation est une interpolation par fonction sinc fenêtrée.

9. Circuit selon la revendication 8, **caractérisé en ce que** la fenêtre est une fenêtre de Hamming.

10. Circuit selon la revendication 7, **caractérisé en ce que** l'interpolation est une interpolation par fonction spline.

11. Circuit selon l'une quelconque des revendications précédentes, **caractérisé en ce que** l'interpolateur (21-23; 35) est agencé de manière à commander la différence entre chaque troisième temps et le quatrième temps respectif conformément à un signal de retour (36) qui représente une qualité de réception.

12. Circuit selon la revendication 11, **caractérisé en ce que** la qualité de réception est selon au moins un élément pris parmi un rapport signal sur bruit et un taux d'erreur binaire.

13. Circuit selon l'une quelconque des revendications précédentes, **caractérisé en ce qu'**il est formé en tant qu'unique circuit intégré monolithique.

14. Tuner haute fréquence **caractérisé en ce qu'**il comprend un circuit (10-15, 20-26, 35, 36) selon l'une quelconque des revendications précédentes et un convertisseur de fréquence (1-7) pour convertir un canal haute fréquence sélectionné selon les signaux analogiques de bande de base en phase et en quadrature.

15. Tuner selon la revendication 14, **caractérisé en ce qu'**il comprend un démodulateur numérique (28) qui est agencé pour recevoir des échantillons numériques de sortie.

16. Démodulateur **caractérisé en ce qu'**il comprend un circuit (10-15, 20-26, 35, 36) selon l'une quelconque des revendications 1 à 13 et un agencement de démodulation (28) qui est agencé pour recevoir les échantillons numériques de sortie.

FIG 1

FIG 2

FIG 3

I & Q sampled T1

I converted to digital T2

Q converted to digital T3

I & Q sampled

I converted to digital

Q converted to digital

FIG  4

I

Phase 1

10

Q

Phase 2

11

12

Control   Clock

13

Convert

14

D

Phase 2

15

D

Phase 1

Q
converted
to digital

Q
sampled

Q
converted
to digital

Q
sampled

Q
converted
to digital

FIG   5

I
sampled
T4

I
converted
to digital
T5

I
sampled
T6

I
converted
to digital

I
sampled

I-component

Time

Q-component

Time

FIG   6

FIG   7

Spectrum of
(I + jQ) at RF

Z*

-Fc

0

Z

Fc

F

Spectrum of
(I + jQ) in
baseband

Z

Frequency (f)

-F/2

F/2

Spectrum of I

X*

X

-F/2

F/2

Spectrum of Q

Y*

Y

-F/2

F/2

FIG 8

FIG 9

I ——— [ 10-sample delay ] ——————————————→
                                    24        25

Q ——— [ D ] ——— [ D ] ——— [ D ] ———
         20

h(-10) ⊗   h(-9) ⊗   h(8) ⊗   h(9) ⊗

21

[ ADD ]

**FIG 10**

23        [ D ]        22

——————————————→
                26

| Q converted to digital | Q sampled | Q converted to digital | Q sampled | Q converted to digital |

**FIG 11**

| I sampled T4 | I converted to digital T5 | I sampled T6 | I converted to digital | I sampled |

FIG   12

EP 1 388 942 B1

FIG 13